# EUROPEAN PATENT APPLICATION

(11) **EP 4 501 750 A1**
(43) Date of publication of application: **05.02.2025**
(21) Application number: 23189630.9
(22) Date of filing: 04.08.2023
(51) Int. Cl.: B62D 21/08, B62D 21/10, B62D 25/16, B62D 29/04

(54) **COMPOSITE MATERIAL-BASED ELECTRIC TRANSPORT VEHICLE PLATFORM**

(30) Priority: 31.07.2023 LT 2023530
(71) Applicant: UAB Elektrinio transporto sistemos, 94103 Klaipeda (LT)
(72) Inventor: Naujekas, Alvydas, LT-92280 Klaipeda (LT)
(74) Representative: Zaboliene, Reda

(57) **Abstract**

This invention relates to a composite platform for low-floor electric buses, made of fiber-reinforced plastic utilizing a vacuum infusion method. The platform's key feature is a composite frame (1), consisting of transversal (12) and longitudinal (13) beams. Additionally, inserts (17,21) are incorporated into the beams (12,13) for securely attaching vehicle components. Separate front (2) and rear (3) arches are designed to support the vehicle's axles and suspension components. Further, external steel connections adaptable to specific axle types/models are integrated. Notably, the platform features a flat, three-dimensional deck structure. The deck components (4,5,6), adhered to the frame (1), enhance the platform's horizontal rigidity, and include a rectangular cutout for installing a disabled access ramp. The innovative design allows for the replacement of external connections in the front and rear arches, accommodating different types and manufacturers of axles. This platform provides the benefits of being lightweight and corrosion-resistant while maintaining the necessary strength and rigidity required for vehicle use.

## Description

### FIELD OF THE INVENTION

The invention relates to an electric transport vehicle platform using composite materials.

### DESCRIPTION OF THE RELATED ART

The invention has significant applicability within the automotive industry, particularly in the realm of bus manufacturing and vehicle modernization. However, its benefits extend beyond buses and can be applied to other vehicle types, including cargo transporters. The automotive industry poses various manufacturing challenges that directly impact the durability and operational efficiency of these vehicles.

At the core of these challenges lies the production of vehicle platforms, the fundamental framework to which critical vehicle components like the body, axle assemblies, steering mechanisms, and more are secured. These platforms are essentially the backbone of different models of a vehicle. However, traditional production methods, which predominantly employ metals like steel, present significant impediments in terms of labor, time, and specialized treatments.

These metallic or steel-constructed platforms require an intensive labor force and substantial time for production due to the mechanical joints or welds involved. Post-production, the platforms necessitate additional protective treatments, particularly anti-corrosive coatings, to assure their durability. These procedures add a layer of cost, thereby reducing overall production efficiency.

The impact of these manufacturing hurdles is not contained to a specific category of vehicles. It instead spans the entire spectrum of motorized transportation, extending from light vehicles, buses, and trucks to various commercial transport vehicles. Consequently, the implications of these production challenges are widespread, with profound effects on the entirety of the automotive industry.

In light of the drawbacks of traditional metal or steel-based platforms, the industry has been proactively searching for alternatives. Among the various options, composite materials have emerged as a promising solution. These materials, in stark contrast to metals, offer a dual advantage: a reduced weight that enhances fuel efficiency and improved resistance to corrosion, thus improving durability. However, the adoption of composite materials in the production of vehicle platforms marks a significant departure from conventional manufacturing practices. This shift requires comprehensive understanding and careful integration of these materials into production processes, making it a complex yet highly advantageous innovation in the automotive industry.

The patent document WO2004000633A1 (published on 31 December 2003) provides a fiber-reinforced plastic platform designed for constructing buses. The tray-shaped platform, made solely of fiber-reinforced hardened plastic resin, eliminates the need for embedded metal-based components. It features bonding surfaces for attaching body members and includes force-transmitting components for connecting the axle and transmission units. Hollow support members with foamed plastic or balsa wood cores enhance bending stiffness. The platform is ideal for low-floor buses, with enclosed load-bearing members and overlapped fiber-reinforced layers. It incorporates multilayer fabric adjoining members with cores, providing through holes and surfaces for clamping. Various connecting structures and components enable the integration of front and rear axles, while steps serve as front and rear walls. Manufacturing involves laminating fabric sheets with resin in a vacuum procedure. However, a limitation of this construction is its suitability only for internal combustion engine vehicle and specific bus model, rendering it unsuitable for needed application.

Patent document nr. KR102251728B1 (published on 17 May 2021) presents an electric vehicle platform that addresses the limitations of conventional designs. By combining a fiber-reinforced plastic body frame with metal brackets, the platform overcomes challenges related to battery load support and reinforcement. This innovative approach enables increased battery capacity, extended mileage, simplified reinforcement structures, and streamlined assembly through adhesive bonding. The lightweight yet sturdy fiber-reinforced plastic frame allows for higher battery capacity without compromising structural integrity. Manufacturers can leverage this platform to design electric vehicles with enhanced performance, greater range, and improved overall efficiency. However, the following platform is optimized for passenger car not electric bus.

An alternative technology of EV platform is described in patent document Nr. US2022227430A1 (published on 21 July 2022) whereby the invention pertains to a running bare chassis assembly for a low-floor bus and its manufacturing method. Conventional low-floor bus body structures are heavy and challenging to work with. The disclosed assembly addresses this by incorporating a front frame with a front suspension, a rear frame assembly with a battery carrier, and a center frame connected through engagements. The rear frame assembly consists of a first rear frame with a rear suspension, a second rear frame with a radiator, and a battery carrier frame. The stress distribution resulting from the first engagement exceeds that of the second engagement, ensuring improved weight distribution. In conclusion, while the running bare chassis assembly for a low-floor bus presented in this invention offers certain advantages such as weight efficiency and simplified manufacturing processes, it is important to note the limitation of not utilizing composite materials.

In CN217146144U (published on 9 August 2022) the present invention pertains to a chassis structure, chassis platform, and electric vehicle. The chassis structure comprises a chassis frame with front, middle, and rear sections connected longitudinally. The middle section houses an installation cavity for the power source, while the front and rear sections provide space for the wheels. A cover plate is attached to the chassis frame to seal the installation cavity, featuring convex ribs with multiple installation positions. This integrated chassis design enhances the integration and safety of the vehicle. The power source is seamlessly incorporated into the chassis, improving overall integration. The installation positions on the cover plate's ribs prevent damage to the cover plate while maintaining the sealing of the installation cavity, ensuring it remains isolated from the passenger compartment and enhancing security. The problem is that the platform length is limited and cannot be used for bigger transport vehicles like buses and trucks.

Accordingly, it is desired to provide composite material-based electric transport vehicle platform.

This description provides a electric vehicle platform, comprising a composite frame of irregular U-shaped beams, created using vacuum infusion of fiber-reinforced plastic. The frame integrates sandwich-type plates, forming a strong, horizontal base. Front and rear arches, constructed similarly, attach to the frame to secure the vehicle's axles and suspension elements. The design incorporates communication channels within the frame for cables, connectors for vehicle components, and a cutout for a disabled ramp. The composite material ensures a lightweight, corrosion-resistant platform with significant strength and rigidity, making it suitable for various vehicle requirements, and its flat design eliminates the need for stepped floors.

### SUMMARY OF THE INVENTION

The invention consists of a method for manufacturing a platform and its structure. The primary component of the platform is a composite frame composed of transverse elements (perpendicular to the longitudinal axis of the vehicle) and continuous beams (arranged along this axis), made in a special mold from fiber-reinforced plastic through vacuum infusion. The beams of the frame have an irregular U shape in cross-section. Composite sandwich-type plates, adhered to the frame beams, cover the cavities of the beams, forming the basis of the platform - a spatial structure of closed profiles, distinguished by increased bending resistance in the horizontal plane.

At the front of the platform frame (according to the direction of vehicle movement), a front arch is mounted, which is separately produced from fiber-reinforced plastic by vacuum infusion. Correspondingly, a rear arch, also manufactured in a dedicated special mold by vacuum infusion, is attached at the end of the frame. The arches are designed to attach the front and rear axles of the vehicle and suspension elements. For this, external steel connectors are provided, which can be adapted to a specific axle type and/or model. Inserts laminated into the beams are used to form communication channels within the frame for mounting power transmission and control cables, as well as connectors for attaching components of the vehicle connected to the platform. At the junction of the transverse and longitudinal frame beams, there are composite details designed to improve the strength properties of the frame. A cutout for a disabled ramp (mobile platform) is provided in the composite plate covering the central part of the frame. The plates connected to and covering the frame form the basis of the vehicle floor. The flat design of the platform is an additional advantage, as it avoids stepped floors.

The composite material ensures low platform weight and resistance to corrosion, while the proposed platform structure provides the necessary strength and rigidity, meeting the requirements set for the vehicle.

### BRIEF DESRCIPTION OF DRAWINGS

FIG. 1: Bottom of low floor electric bus platform.
FIG. 2: Low floor electric bus platform parts assembly.
FIG. 3: Top of low floor electric bus platform.
FIG. 4: Composite frame of the platform.
FIG. 5: Insert at the end of the frame crossbeam.
FIG. 6: Insert in the rear enclosing beam.
FIG. 7: Overall view of the front arch.
FIG. 8: Composite parts of the front arch.
FIG. 9: Overall view of the rear arch.
FIG. 10: Composite parts of the rear arch.
FIG. 11: Front arch and its external connections.
FIG. 12: External connections mounted on the front arch and connected to the frame.
FIG. 13: Rear arch with externally attached connections.
FIG. 14: Overall view of the rear arch with installed external connections.

### DETAILED DESCRIPTION OF THE INVENTION

The primary application of this invention is in the field of electric bus production, specifically for the creation of low-floor electric buses. The lightweight, corrosion-resistant platform design contributes to increased fuel efficiency, a critical aspect of electric vehicle performance. The flat design, achieved with usage of the composite frame and plates, eliminates the need for stepped floors, enhancing accessibility, particularly for disabled passengers. The flexibility in the attachment of various components, due to embedded parts and adaptable steel connections, allows for customization and versatility in the assembly of different bus models. Hence, this platform has the potential to significantly improve the manufacturing process and overall performance of low-floor electric buses, making them more sustainable, accessible, and adaptable to various models and specifications.

The following description presents an application variant of the invention in which the platform is utilized in buses, specifically electric low-floor buses. The platform serves as a mounting point for various bus components, including the bus body, chassis elements such as the front and rear axles, and other relevant elements of the bus system. The specific components attached to the platform may vary depending on the particular bus model.

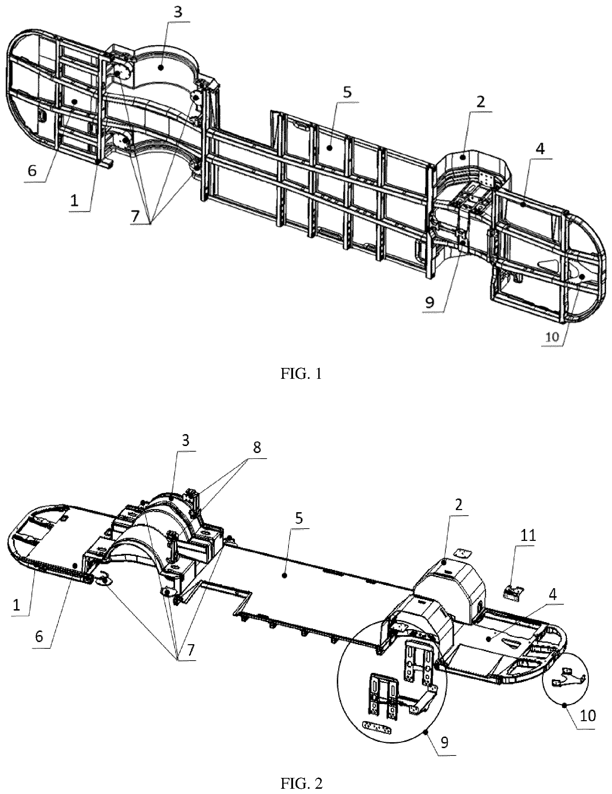

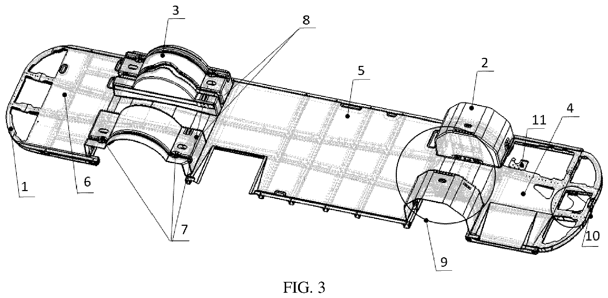

The invention in discussion pertains to a technologically advanced platform for a low-floor electric bus. The platform FIG. 1, FIG. 2, FIG. 3, comprising a composite frame (1), is a blend of strength and light weight, thanks to the utilization of fiber-reinforced plastic created via the vacuum infusion method. This composite frame (1) is formed from irregular U-shaped hollow longitudinal beams (13) and transverse beams (12), which are further reinforced by sandwich-type composite deck plates. These deck plates are adhered to the beams (12, 13), thereby covering the beam (12, 13) cavities to form a spatial structure of closed profiles, notable for its enhanced mechanical resistance. The composite frame (1) is designed to house the body and several components of the bus, including axles.

Distinct elements within the platform's structural design are the front arch (2) and rear arch (3). These arches provide key attachment points for the vehicle's front and rear axles, as well as other suspension elements. The construction overall provides the capability to easily replace the external connections mounted in the front arch (2) with others that are specifically designed for different types or manufacturers of axles.

Moreover, the platform includes a front deck (4), a middle deck (5), and a rear deck (6). These elements are essentially composite plates that cover the frame (1), thereby enhancing the rigidity of the structure, and concurrently providing a flat surface to be utilized as the electric bus floor.

An additional feature of the platform is the incorporation of multiple fasteners and joints that ensure the secure attachment of the various vehicle components. Among these are fasteners for air spring attachment (7), tie rod attachment (8), as well as the front suspension attachment joint (9), tow bracket (10), and steering gear bracket (11). These attachment points provide the flexibility and adaptability needed to accommodate specific bus model requirements, offering an element of customization to the design.

An integral part of the composite frame (1) of the low-floor electric bus platform is its construction to securely connect the body and chassis elements of the bus. This composite frame comprises cross beams (12) and longitudinal beams (13) made from fiber-reinforced plastic using the vacuum infusion process. These beams form the basic structure of the platform, contributing to its strength and rigidity.

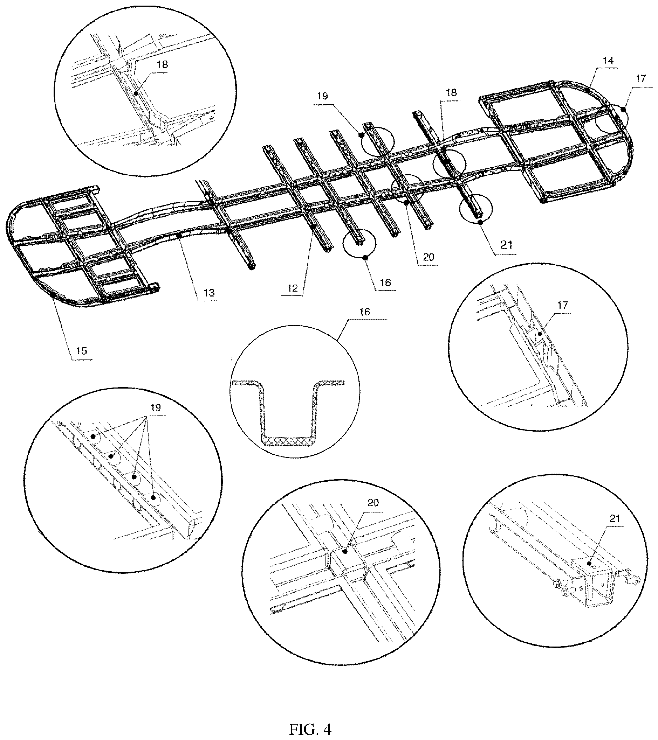

Additionally, the frame includes a front beam (14) and a rear beam (15) FIG. 4. These beams, situated at the front and rear of the platform, provide added structural support and stability to the platform, reinforcing the overall strength of the structure, beam cross section (16).

The frame (1) of the platform is further characterized by the integration of steel inserts (17, 21) and solid composite inserts (18). These inserts (17, 21) provide crucial connection points for attaching various components of the bus (body and chassis elements) to the platform, thus ensuring secure and robust attachment of different parts. Composite frame's transverse beam (12) contains hollow cylindrical and elliptical integrated components (19), which are utilized for the installation of communication channels within the platform.

Finally, at the junction of the transverse (12) and longitudinal (13) beams, there is a specialized composite material part (20). This specific component further enhances the strength and stability of the platform at these crucial junction points, ensuring the platform's durability and robustness.

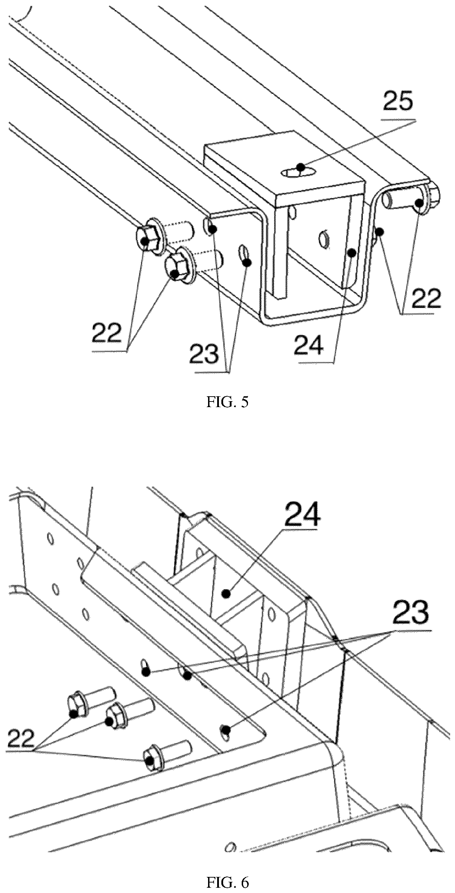

The low-floor electric bus platform incorporates connection elements within its composite frame (1) FIG. 5, FIG 6. These include bolts (22) specifically designed to connect the beam and insert (24), though holes in the beam (23). An insert (24) is connected to the beam, further enhancing the structural stability of the platform. A hole in insert (24) ensures a robust connection with the bus body, providing the necessary interconnectivity within the platform's components.

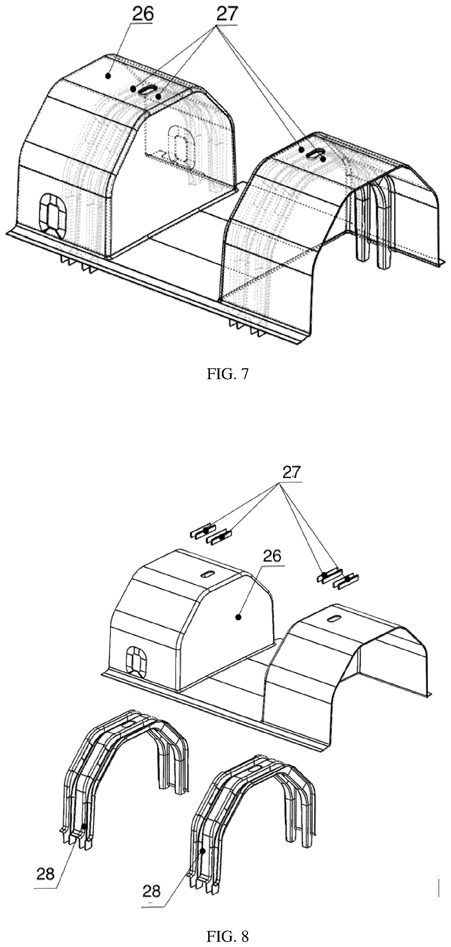

The front arch (2) of the platform is engineered to accommodate the front axle and suspension components FIG. 7, FIG 8. This arch is made up of a seamless cover (26) and internal structural elements (28). The upper parts of these elements feature reinforcing elements (4) that bolster the front axle suspension element's attachment area to the arch. Both stiffness elements (27) are bonded and laminated within the cover (26) to create a unified composite structure. The front arch (2) as well as the rear arch (3) are securely bonded and laminated to the frame (1). The low-floor electric bus platform distinguishes itself by the meticulous integration of composite material front arch (2) and rear arch (3) into the overall frame (1), ensuring structural integrity.

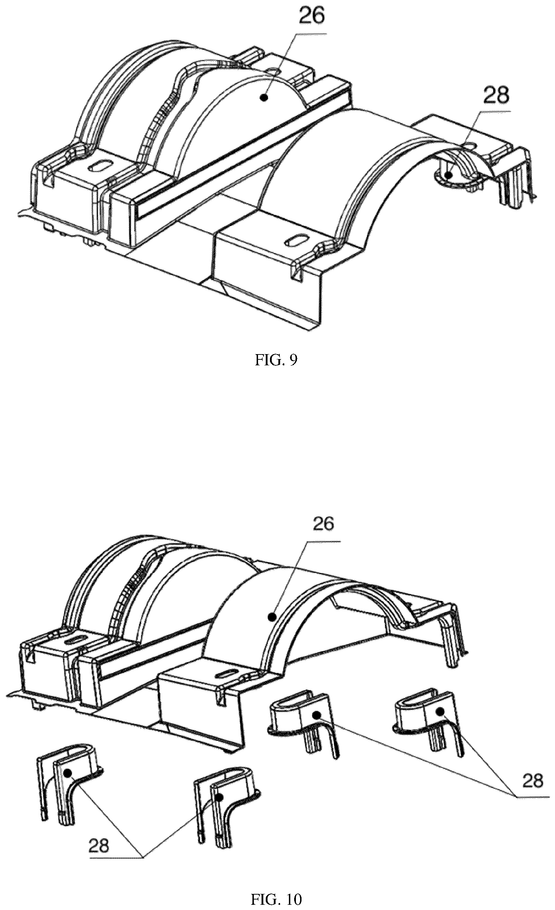

On the rear, the rear arch (3) is designed to attach the drive axle to the platform FIG. 9, FIG. 10. It includes a seamless cover (26) and structural elements of the arch (28). The arch accommodates the attachment of air springs (7), which are manufactured using vacuum infusion and mounted on the inner side of the arch (3), facilitating the integration of suspension components. The rear arch (3) is then securely fastened to the frame (1).

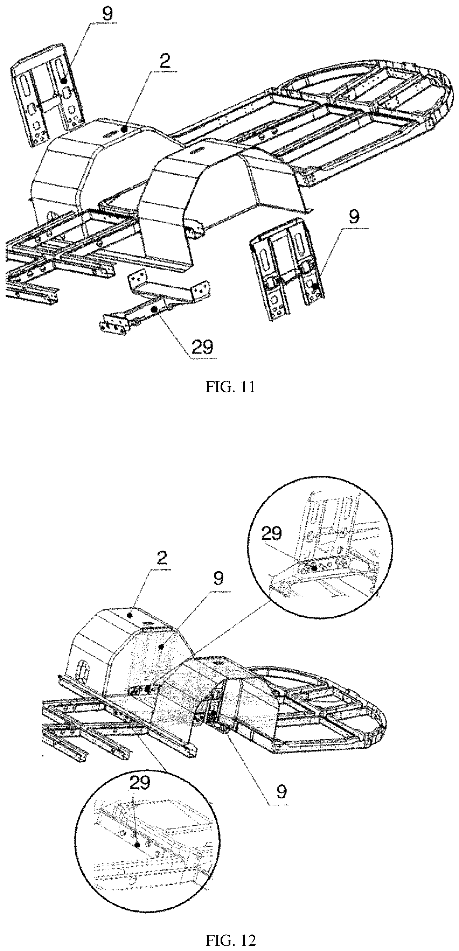

Unique to the low-floor electric bus platform is the incorporation of external connections vital for attaching various components such as the suspension system to the platform. Located within the inner sides of the front arch (2) are steel connections (30), affixed to the longitudinal beam (13) of the composite frame (1) using bolts FIG. 11, FIG. 12. These connections also interface with the component (29) connecting the joints to frame which is bolted onto the frame's transverse beam (12). This arrangement forms a robust structure for suspensions' attachment, thereby providing a stable mechanical configuration. The outer connections, used for attaching the front axle to the platform, are interconnected with both the front arch (2) and frame (1) via bolts, thereby creating a mechanically resistant structure for securing the chassis elements, specifically the front axle.

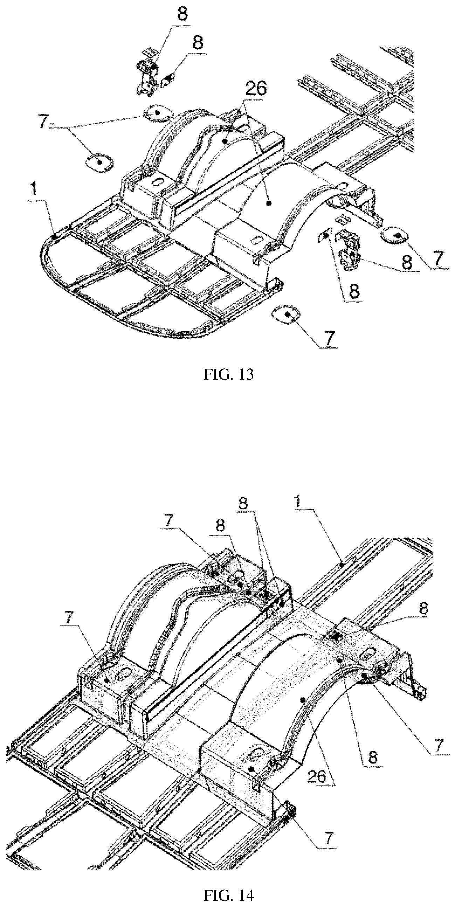

A distinguishing feature of this platform is the provision to substitute the external connections with others designed for different types or manufacturers of axles. This suggests the platform's potential for customization and adaptability, catering to a wide range of axle configurations. The same mechanism is implemented within the rear arch (3), which is used for the attachment of the drive axle from the chassis elements. The design allows for replacement of the external connections, providing versatility to adapt to different axle types or manufacturers FIG. 13, FIG. 14.

The platform distinguishes itself by its specific configuration of platforms deck, consisting of three separate composite parts, front (4), middle (5), rear (6), manufactured using vacuum infusion. These components are connected to the frame and arches by adhesive and over lamination. They enclose the hollow spaces within the frame (1), thereby substantially enhancing the platform's structural strength and rigidity.

Further enhancing the platform's versatility and accessibility, the design includes a provision for a designated opening in the deck. This opening is intended for the installation of a ramp or movable lift for people with disabilities. This feature, securely bolted to the frame (1), ensures that the platform is adaptable and capable of accommodating accessibility requirements, showcasing its innovative and user-friendly design.

## Claims

1. A system of composite material-based electric transport vehicle platform comprising:
- a platform frame (1);
- a front arch (2) for attaching the front axle;
- a rear arch (3) for attaching rear driving axle;
- a deck formed of three parts: the front (4), the middle (5), the rear (6);
- an external connection for attaching drivetrain elements comprises:
- an air spring attachment connection (7);
- a rear tie rod attachment (8);
- a front suspension attachment joint (9);
- a tow bracket (10);
- a steering gear bracket (11).
**characterized in that** its base is made up of a frame (1) made from irregular U-shaped hollow longitudinal (13) and transverse (12) beams, which are manufactured in a special mold from fiber-reinforced plastic using vacuum infusion and further reinforced by sandwich-type composite deck plates adhered to the beams (12, 13), which cover the beam (12, 13) cavities to form a spatial structure of closed profiles, notable for its enhanced mechanical resistance.

2. The system of claim **1**, wherein the composite frame (1) includes inserts (17, 21) designed for attaching the body and chassis elements to the platform.

3. The system of claim **1**, wherein the composite frame's transverse beam (12) contains hollow cylindrical and elliptical integrated components (19), which are utilized for the installation of communication channels within the platform.

4. The system of claim **1**, wherein the front (2) and rear arches (3), made of composite material, are bonded and laminated to the frame (1).

5. The system of claim **1**, wherein the outer connections, used for attaching the front axle to the platform, are interconnected with both the front arch (2) and frame (1) via bolts, thereby creating a mechanically resistant structure for securing the chassis elements, specifically the front axle.

6. The system of claim **1**, wherein it provides the capability to easily replace the external connections mounted in the front arch (2) with others that are specifically designed for different types or manufacturers of axles.

7. The system of claim **1**, wherein it includes outer connections mounted in the rear arch (3), which serve for the attachment of the drive axle of the chassis elements.

8. The system of claim **1,** wherein it provides the ease of replacing the external connections mounted in the rear arch (3) with others specifically designed for different types or manufacturers of axles.

9. The system of claim **1,** wherein the platform's deck is configured from three separate composite parts, front (4), middle (5), rear (6) manufactured using vacuum infusion, adhered and laminated to the frame (1) and arches (2, 3), thereby covering and sealing the hollow spaces within the frame (1), significantly enhancing the platform's strength.

10. The system of claim **1,** wherein a designated space, or an opening in the deck, is provided for mounting a ramp or movable lift for individuals with disabilities, which is secured to the frame (1) using bolts.
